Europäisches Patentamt

European Patent Office

Office européen des brevets

(19)

(11) **EP 1 089 030 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(51) Int Cl.⁷: **F16P 3/14**, G01V 8/14, G01S 17/02, G01S 17/10

(21) Anmeldenummer: **00118407.6**

(22) Anmeldetag: **24.08.2000**

(54) **Verfahren und Vorrichtung zum Überwachen eines Schutzbereichs**

Device and method for monitoring a protection zone

Procédé et dispositif de contrôle d'une zone de protection

(84) Benannte Vertragsstaaten:
**AT BE CH CY DE DK ES FI FR GB GR IE IT LI LU MC NL PT SE**

(30) Priorität: **28.09.1999 DE 19946476**

(43) Veröffentlichungstag der Anmeldung:
**04.04.2001 Patentblatt 2001/14**

(73) Patentinhaber: **SICK AG**
**79183 Waldkirch, Breisgau (DE)**

(72) Erfinder: **Görnemann, Otto**
**41564 Kaarst (DE)**

(74) Vertreter: **Manitz, Finsterwald & Partner GbR**
**Postfach 31 02 20**
**80102 München (DE)**

(56) Entgegenhaltungen:
EP-A- 0 520 247     DE-C- 19 621 120
US-A- 3 727 207

**Beschreibung**

Es wird ein Verfahren zum Überwachen eines Schutzbereichs beschrieben, bei dem zumindest ein Lichtsignal durch den Schutzbereich hindurch in Richtung eines den Schutzbereich zumindest bereichsweise begrenzenden Begrenzungselements ausgesandt wird, das Lichtsignal von dem Begrenzungselement zu einem Lichtempfänger reflektiert oder remittiert wird, die Lichtlaufzeit vom Ausenden bis zum Empfangen des Lichtsignals ermittelt wird und ein Unterbrechungssignal erzeugt wird, wenn die ermittelte Lichtlaufzeit von einer vorbestimmten Maximal-Lichtlaufzeit zumindest um einen vorgegebenen Schwellenwert abweicht. Weiterhin ist die Erfindung auf eine Vorrichtung zur Durchführung eines solchen Verfahrens gerichtet.

Solche Verfahren werden beispielsweise bei berührungslos wirkenden Schutzeinrichtungen, insbesondere in Form von mehrstrahligen Lichtgittern oder Lichtvorhängen, und/oder bei optoelektronischen Sensoren zum Erkennen und Klassifizieren von Objekten verwendet. Dazu können ein oder mehrere Sender und Empfänger in einem gemeinsamen Gehäuse angeordnet sein, das auf der einen Seite des Schutzbereichs angeordnet ist, während auf der anderen Seite des Schutzbereichs ein Begrenzungselement zum Reflektieren oder Remittieren des von den Sendern ausgesandten Lichtsignals auf den jeweiligen Empfänger ausgebildet ist.

Der Abstand zwischen den Sender-Empfänger-Paaren auf der einen Seite und dem jeweiligen reflektierenden Begrenzungselement auf der anderen Seite ist bekannt, so daß dieser Abstand bzw. die entsprechende Lichtlaufzeit dem System eingelernt werden kann.

Dringt ein Objekt in den Schutzbereich ein, so daß zumindest einer der ausgesandten Lichtstrahlen unterbrochen wird, ändert sich die ermittelte Lichtlaufzeit des entsprechenden Lichtsignals, so daß ein Unterbrechungssignal erzeugt wird, das je nach Anwendung eine gewünschte Folgeaktion auslöst. Dies kann beispielsweise ein Stillsetzen einer zu überwachenden Maschinen, ein Abgeben eines Alarmsignals, eine Meßwertausgabe oder auch eine Meßwertspeicherung sein.

Bei bestimmten Anwendungen ist es wünschenswert, daß vordefinierte Objekte den Schutzbereich passieren können, ohne daß ein Unterbrechungssignal erzeugt wird. So soll beispielsweise das Durchqueren des Schutzbereichs von definierten Objekten, beispielsweise auf einem Förderband, kein Unterbrechungssignal auslösen, während das Durchschreiten des Schutzbereichs durch eine Person seitlich des Objekts oder auch auf dem Förderband ein entsprechende Unterbrechungssignal auslösen soll.

Aufgabe der Erfindung ist es, ein Verfahren und eine Vorrichtung der eingangs genannten Art so auszubilden, daß in den Schutzbereich eindringende vordefinierte Objekte automatisch erkannt werden, so daß in diesem Fall ein Erzeugen eines Unterbrechungssignals unterbleibt. Gleichzeitig muß jedoch beim Eindringen von nicht definierten Objekten in den Schutzbereich das Erzeugen des Unterbrechungssignals weiter gewährleistet sein.

Ausgehend von dem Verfahren der eingangs genannten Art wird diese Aufgabe erfindungsgemäß dadurch gelöst, daß die ermittelte Lichtlaufzeit mit zumindest einer weiteren, von der Maximal-Lichtlaufzeit verschiedenen, zulässigen Lichtlaufzeit verglichen wird und kein Unterbrechungssignal erzeugt wird, wenn die ermittelte Lichtlaufzeit innerhalb eines vorgegeben Toleranzbereichs um die zulässige Lichtlaufzeit liegt. Eine erfindungsgemäß ausgebildete Vorrichtung umfaßt eine Auswerteeinheit, die zum Vergleichen der ermittelten Lichtlaufzeit mit zumindest einer weiteren, von der Maximal-Lichtlaufzeit verschiedenen, zulässigen Lichtlaufzeit ausgebildet ist, die kein Unterbrechungssignal erzeugt, wenn die ermittelte Lichtlaufzeit innerhalb eines vorgegebenen Toleranzbereichs um die zulässige Lichtlaufzeit liegt.

Erfindungsgemäß werden somit charakteristische Konturen der zulässigen Objekte eingelernt, indem entsprechende Lichtlaufzeiten, die sich beim Reflektieren der ausgesandten Lichtsignale an dem jeweiligen Objekt ergeben, in das System eingelernt werden. Tritt ein Objekt in den Schutzbereich ein, so wird vor Erzeugen des Unterbrechungssignals die aufgrund der Reflexion des ausgesandten Lichtsignals an der Objektoberfläche ermittelte Lichtlaufzeit mit der eingelernten zulässigen Lichtlaufzeit verglichen und es wird kein Unterbrechungssignal erzeugt, falls die ermittelte Lichtlaufzeit mit der zulässigen Lichtlaufzeit innerhalb eines vorgegebenen Toleranzbereichs übereinstimmt.

Je nach der Form der zulässigen Objekte können dabei mehrere zulässige Lichtlaufzeiten abgespeichert sein, die insbesondere bei der Verwendung von mehreren Lichtstrahlen abhängig vom Auftreffort der Lichtstrahlen unterschiedlich sein können.

Tritt hingegen ein nicht definiertes Objekt in den Schutzbereich ein oder ist ein zulässiges Objekt nicht korrekt positioniert, so stimmt die ermittelte Lichtlaufzeit weder mit der Maximal-Lichtlaufzeit noch mit der zulässigen Lichtlaufzeit überein, so daß in diesem Fall ein Unterbrechungssignal erzeugt wird.

Nach einer vorteilhaften Ausführungsform der Erfindung wird die Lichtlaufzeit des Lichtsignals kontinuierlich oder in vorgegebenen, insbesondere periodischen Zeitabständen ermittelt. Auf dieser Weise wird die gesamte Kontur eines sich durch den Schutzbereich hindurch bewegenden Objektes in Bewegungsrichtung abgetastet, so daß Abweichungen von der zulässigen Objektkontur sofort erkannt werden.

Nach einer vorteilhaften Ausgestaltung der Erfindung wird die jeweils ermittelten Lichtlaufzeit automatisch mit der weiteren Lichtlaufzeit verglichen, wenn eine Überschreitung des Schwellenwertes festgestellt wird. Eine solchen Vorgehensweise ist beispielsweise dann möglich, wenn das Umschalten auf den Vergleich mit der weiteren zulässigen Lichtlaufzeit noch innerhalb einer maximal zulässigen Ansprechzeit möglich ist. In diesem Fall wird somit unmittelbar durch das Eintreten eines Objekts in den Schutzbereich die Umschaltung von der Überprüfung auf die Maximal-Lichtlaufzeit zu der Überprüfung auf die weitere zulässige Lichtlaufzeit vorgenommen.

Insbesondere wird dabei die jeweils ermittelte Lichtlaufzeit solange mit der weiteren zulässigen Lichtlaufzeit verglichen, bis eine Überschreitung des Toleranzbereichs festgestellt wird. Eine solche Überschreitung des Toleranzbereichs kann entweder bedeuten, daß die Kontur des erfaßten Objektes nicht mehr mit der zulässigen Kontur übereinstimmt, oder daß das Objekt den Schutzbereich wieder verlassen hat. Um eine entsprechende Unterscheidung treffen zu können, wird nach diese Überschreitung des Toleranzbereichs die ermittelte Lichtlaufzeit wiederum mit der Maximal-Lichtlaufzeit verglichen, wobei ein Unterbrechungssignal erzeugt wird, wenn die ermittelte Lichtlaufzeit weiterhin von der Maximal-Lichtlaufzeit um einen vorgegeben Schwellenwert abweicht.

Grundsätzlich wird in einer bevorzugten Ausgestaltung der Erfindung das Unterbrechungssignal erzeugt, wenn innerhalb eines vorgegeben Zeitintervalls weder das Unterschreiten des Schwellenwertes noch das Einhalten des Toleranzbereichs festgestellt wird.

In einer weiteren Ausgestaltung der Erfindung wird der Vergleich der ermittelten Lichtlaufzeit mit der weiteren zulässigen Lichtlaufzeit durch ein externes Startsignal ausgelöst. Dabei kann das Startsignal durch ein zu erkennendes Objekt erzeugt werden, unmittelbar bevor dieses in den Schutzbereich eindringt.

Diese Variante ist dann sinnvoll, wenn ein Umschalten der für den Vergleich der Lichtlaufzeiten abgespeicherten Referenzwerte (Maximal-Lichtlaufzeit, weitere zulässige Lichtlaufzeiten) beispielsweise aufgrund einer speziellen Kontur des Objektes innerhalb einer maximalen zulässigen Ansprechzeit nicht möglich ist. In diesem Fall wird die Umschaltung auf den Vergleich der ermittelten Lichtlaufzeit mit der weiteren zulässigen Lichtlaufzeit beispielsweise durch einen an dem System anschließbaren Hilfssensor initialisiert, durch den das externe Startsignal erzeugt wird.

Hierbei kann es sich beispielsweise um eine einfache Lichtschranke handeln, die unmittelbar vor der beispielsweise als Lichtgitter ausgebildeten Vorrichtung angeordnet ist. Idealerweise wird dann, wenn die Erfindung für den Unfallschutz verwendet wird, ein Hilfssensor gewählt, der zulässig in den Gefahrenbereich eindringende Objekte von unzulässigen Objekten, insbesondere Personen, unterscheiden kann. Dies kann beispielsweise dadurch erreicht werden, daß zwei oder mehrere Hilfssensoren in Transportrichtung so weit auseinander angeordnet werden, daß ein zulässiges Objekt mit ausreichender Länge von beiden Hilfssensoren gleichzeitig erfaßt wird, während z.B. eine Person jeweils nur von einem Hilfssensor erfaßt werden kann. Eine UND-Verknüpfung der Ausgangssignale der Hilfssensoren liefert somit nur dann eine logische 1, wenn ein zulässiges Objekt in den Überwachungsbereich eindringt.

Weiterhin ist es möglich, als Hilfssensoren auf beiden Seiten der Transportstrecke Lichttaster mit begrenzter Reichweite vorzusehen, so daß nur Objekte mit einer bestimmten Breite als zulässige Objekte erkannt werden.

Die Unterscheidung von zulässigen und nicht zulässigen Objekten kann gegebenenfalls auch durch Ausbildung der Hilfssensoren als beispielsweise induktive Näherungsschalter erfolgen, durch die zulässige metallische Objekte, nicht jedoch z.B. Personen erkannt werden.

Entsprechend kann von dem Vergleich der ermittelten Lichtlaufzeit mit der weiteren zulässigen Lichtlaufzeit auf den Vergleich mit der Maximal-Lichtlaufzeit aufgrund eines externes Stoppsignals umgeschaltet werden. Dabei kann das Stoppsignal durch ein zu erkennendes Objekt erzeugt werden, unmittelbar nachdem dieses den Schutzbereich verlassen hat oder unmittelbar bevor es den Schutzbereich verläßt.

Hierzu kann entweder der gleiche oder ein entsprechender Hilfssensor verwendet werden, beispielsweise in Form einer Lichtschranke, der unmittelbar vor oder hinter der erfindungsgemäßen Vorrichtung angeordnet ist und das Stoppsignal abgibt, wenn das abgetastete Objekt vollständig durch den Schutzbereich und die Lichtschranke hindurchgetreten ist.

Während das Startsignal somit beim Eintreten der vorderen Kanten des zu erfassenden Objektes in den Schutzbereich erzeugt wird, wird das Stoppsignal beim Austreten des Objektes aus dem Schutzbereich erzeugt.

Eine solche Funktionalität kann beispielsweise durch eine logische UND-Verknüpfung der Ausgangssignale der Hilfssensoren erreicht werden.

Grundsätzlich ist es vorteilhaft, wenn mehrere, insbesondere ein Lichtgitter bildende Lichtsignale verwendet werden, da bei einer größeren Anzahl von Lichtsignalen die Dichte des Lichtgitters sowie die Sicherheit einer entsprechenden Vorrichtung erhöht und damit der für die Sicherheitswirkung notwendige Sicherheitsabstand verringert werden kann. Weiterhin können in diesem Fall auch komplexe Konturen von Objekten erfaßt werden.

Grundsätzlich ist es auch möglich, abhängig von der Bewegungsgeschwindigkeit des Objektes die eingelernten zulässigen Lichtlaufzeiten zu variieren, um auf diese Weise auch Objekte als zulässig erkennen zu können, deren seitliche Kontur zumindest bereichsweise schräg zur Bewegungsrichtung der Objekts beim Durchlaufen des Schutzbereichs verläuft. Der Anfangswert der jeweiligen zulässigen Lichtlaufzeit kann dabei entweder durch das Eintreten des Objekts in den Schutzbereich oder, wie bereits beschrieben, durch ein externes Startsignal getriggert werden.

Grundsätzlich ist es möglich, daß kein Unterbrechungssignal erzeugt wird, wenn zumindest für einen Teil der Lichtsignale die ermittelte Lichtlaufzeit innerhalb eines vorgegebenen Toleranzbereichs um eine jeweils zulässige Lichtlaufzeit liegt. Je nach zu erkennenden Objekten kann es beispielsweise ausreichend sein, daß beim einem Lichtgitter lediglich die beiden äußersten Strahlen auf zulässige Lichtlaufzeiten überprüft werden.

Nach einer weiteren vorteilhaften Ausführungsform der Erfindung werden die Lichtsignale aus unterschiedlichen Richtungen, insbesondere aus gegenüberliegenden Richtungen durch den Schutzbereich hindurch gesandt. Dies hat den Vorteil, daß beim Eindringen eines Objekts in den Schutzbereich auf beiden Seiten des Objekts ein aktives Schutzfeld erhalten bleibt. Seitlich des zulässigen Objekts in den Schutzbereich eindringende nichtzulässige Objekte werden somit in allen Fällen sicher erfaßt.

Um eine große Breite des Schutzbereichs realisieren zu können, können die Begrenzungselemente als Reflektoren ausgebildet sein. Auf diese Weise können Schutzbereichsbreiten von sechs Metern und mehr erreicht werden.

Weitere vorteilhafte Ausführungsformen der Erfindung sind in den Unteransprüchen angegeben.

Die Erfindung wird nachfolgend eines Ausführungsbeispiels unter Bezugnahme auf die Zeichnung näher erläutert; in diesen zeigen:

Fig. 1     eine Seitenansicht einer erfindungsgemäß ausgebildeten Vorrichtung mit einem zulässigen Objekt,

Fig. 2     eine erfindungsgemäß ausgebildete Vorrichtung mit einer Person im Schutzbereich,

Fig. 3     eine weitere Ausführungsform der Erfindung,

Fig. 4     eine Draufsicht auf die Ausführungsform nach Fig. 3 und

Fig. 5     eine weitere Ausführungsform der Erfindung.

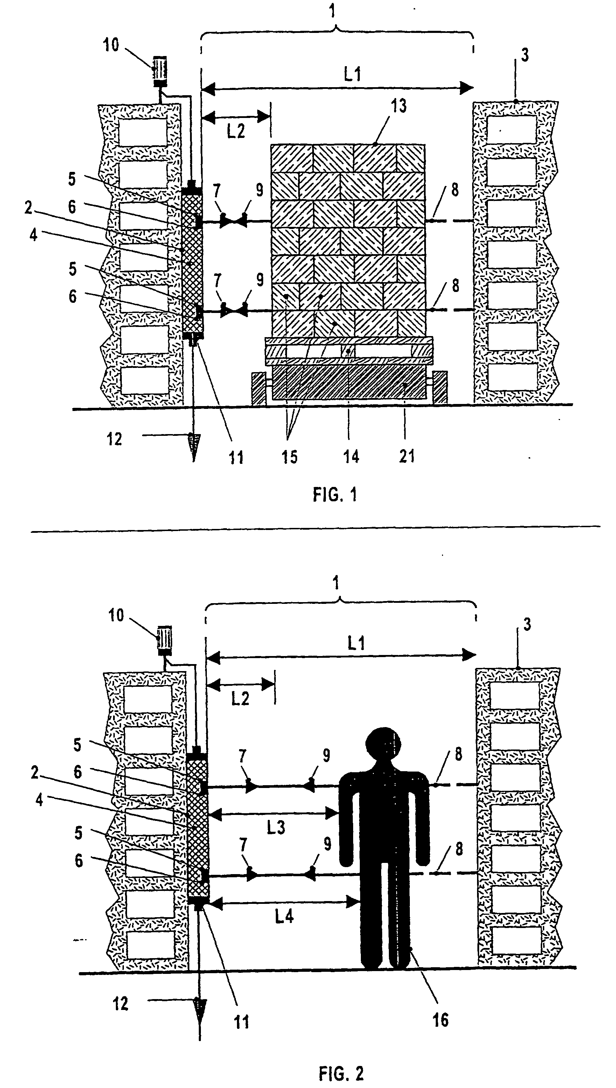

Fig. 1 zeigt eine Vorrichtung zur Überwachung eines Schutzbereichs 1, dessen Breite mit L1 bezeichnet ist.

Der Schutzbereich 1 wird auf einer Seite durch eine Sensoreinheit 2 und auf der anderen Seite durch ein Begrenzungselement 3 begrenzt.

Die Sensoreinheit 2 besteht aus einem Gehäuse 4, in dem schematisch angedeutete Sender 5 und Empfänger 6 angeordnet sind, wobei durch die Sender 5 gemäß Pfeilen 7 Lichtsignale in den Schutzbereich ausgesandt werden. Diese Lichtsignale 7 treffen im Falle eines freien Schutzbereichs 1 auf das Begrenzungselement 3, wie es durch die gestrichelten Linien 8 angedeutet ist, und werden an dem Begrenzungselement 3 so reflektiert bzw. remittiert, daß die zurücklaufenden, durch Pfeile 9 dargestellten Lichtsignale von den Empfängern 6 empfangen werden. Dies kann, wie Fig. 1 dargestellt, insbesondere im Autokollimationsverfahren erfolgen.

Durch die Verwendung von pulsförmigen Lichtsignalen kann die vom Aussenden der Lichtsignale bis zum Empfangen der Lichtsignale verstrichene Lichtlaufzeit ermittelt werden, die repräsentativ für den Abstand L1, d.h. die Breite des Schutzbereichs 1 ist (da die ermittelte Lichtlaufzeit die Zeit ist, die das ausgesandte Licht für das Zurücklegen des Weges 2 x L1 benötigt).

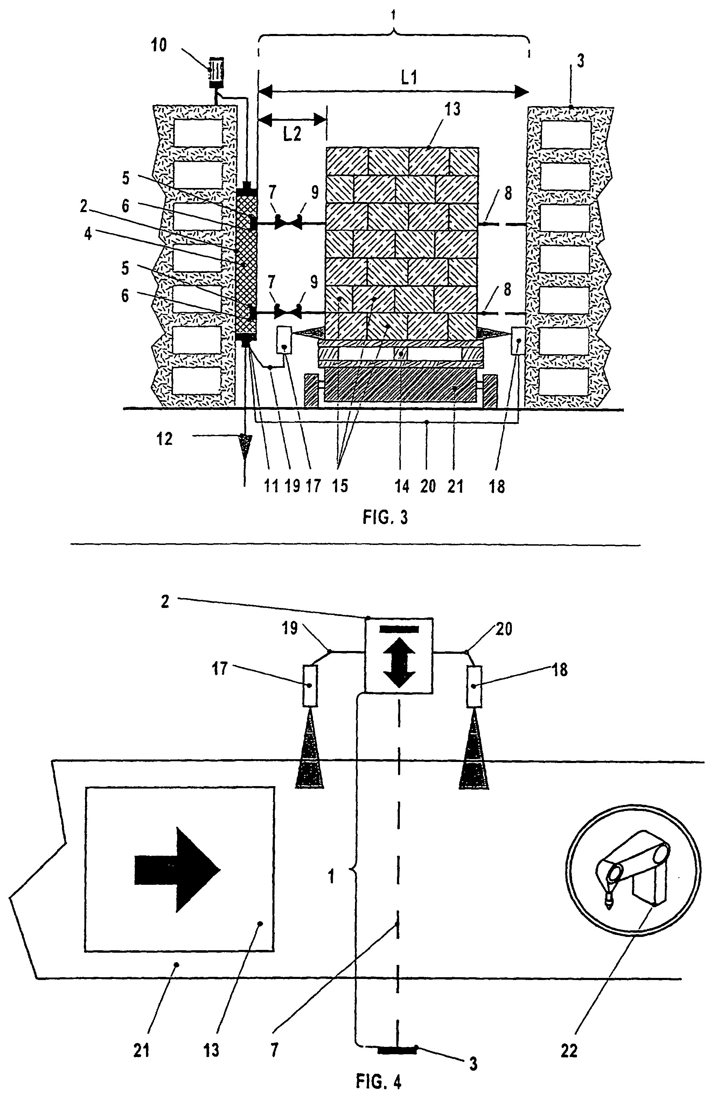

An der Sensoreinheit 2 ist eine Signaleinrichtung 10 angeschlossen, die in Form einer Warnleuchte ausgebildet ist und beispielsweise den geänderten Arbeitszustand der Schutzeinrichtung beim Eindringen zulässiger Objekte und/oder ein Alarmsignal beim Eindringen unzulässiger Objekte anzeigt, und zusätzlich besitzt die Sensoreinheit 2 einen weiteren Ausgang 11, der über eine Steuerleitung 12 beispielsweise mit einer nicht dargestellten Maschinensteuerung für eine durch die Schutzeinrichtung abgesicherte Maschine 22 (Fig. 4) verbunden ist.

In Fig. 1 ist in dem Schutzbereich ein Objekt 13 angeordnet, das im vorliegendem Beispiel aus einer Palette 14 mit darauf angeordneten kistenförmigen Elementen 15 besteht.

Das Objekt 13 wird beispielsweise durch eine Förderband 21 (Fig. 4) durch den Schutzbereich 1 hindurch bewegt, wobei der freie Abstand zwischen der Sensoreinheit 2 und der der Sensoreinheit 2 zugeordneten Seitenkante des Objekts 13 mit L2 bezeichnet ist.

Fig. 2 zeigt die Vorrichtung gemäß Fig. 1, wobei anstelle des Objekts 13 eine Person 16 im Schutzbereich vorhanden ist.

Anhand der Fig. 1 und 2 wird im folgenden das erfindungsgemäße Verfahren näher dargelegt:

Die erfindungsgemäße Schutzeinrichtung wird zunächst auf die Breite L1 des Schutzbereichs 1 justiert. Dazu werden die Lichtsignale 7 ohne Objekt im Schutzbereich 1 in Richtung des Begrenzungselements 3 ausgesandt und nach Empfang der reflektierten Lichtsignale 9 die Lichtlaufzeit ermittelt und als Maximal-Lichtlaufzeit im System gespeichert.

Anschließend wird ein zulässiges Objekt, beispielsweise das Objekt 13, in eine Position in den Schutzbereich 1 gebracht, die als zulässige Position erkannt werden soll, d.h. bei einem Eintreten eines Objekts 13 in den Schutzbereich 1 an die entsprechende zulässige Position im Abstand L2 von der Sensoreinheit 2 soll kein Unterbrechungssignal erzeugt und damit die Alarmeinrichtung 10 sowie die angeschlossene Maschinensteuerung nicht angesteuert werden.

Ist das Objekt 1 in der in Fig. 1 dargestellten, zulässigen Position innerhalb des Schutzbereichs 1 angeordnet, so wird die Lichtlaufzeit ermittelt, die die ausgesandten Lichtsignale 7 benötigen, um den Abstand L2 zurückzulegen, an der Seitenwand des Objekts 13 reflektiert zu werden und anschließend von den Sendern 6 wieder empfangen zu werden. Die ermittelte Lichtlaufzeit wird als weitere zulässige Lichtlaufzeit, zusätzlich zu der Maximal-Lichtlaufzeit, im System abgespeichert.

Dabei können die weiteren zulässigen Lichtlaufzeiten für die unterschiedlichen Sender/Empfänger-Paare auch unterschiedlich sein, wenn dies durch die Form des zulässigen Objekts erforderlich sein sollte. Weiterhin ist es auch möglich, daß bei Objekten mit in Bewegungsrichtung schräg verlaufende Seitenwänden für die jeweiligen Sender/Empfänger-Paare unterschiedliche zulässige Lichtlaufzeiten, insbesondere ganze Lichtlaufzeitverläufe abgespeichert werden.

Grundsätzlich ist es auch möglich, daß sowohl die Maximal-Lichtlaufzeit als auch die weiteren zulässigen Lichtlaufzeiten nicht durch ein Lernverfahren in das System eingelernt, sondern in diesem bereits vordefiniert sind oder aufgrund von Berechnungen eingegeben werden können. In diesem Fall werden die Begrenzungselemente 3 sowie die Objekte 13 den vorgegebenen Lichtlaufzeiten entsprechend positioniert.

Nachdem das System vor Inbetriebnahme auf die beschriebene Weise justiert wurde, werden zulässige Objekte 13, die im zulässigen Abstand L2 in den Schutzbereich eindringen, erkannt, so daß kein Alarm oder Stoppbefehl ausgelöst wird. Beim Betrieb der Schutzeinrichtung wird kontinuierlich oder in diskreten Zeitabständen die Lichtlaufzeit der ausgesandten und reflektierten Lichtsignale 7, 9 ermittelt. Solange die ermittelte Lichtlaufzeit von der Maximal-Lichtlaufzeit nicht um einen vorgegeben Schwellenwert abweicht, erkennt das System, daß kein Objekt 13 im Schutzbereich 1 angeordnet ist.

Tritt ein Objekt 13 in den Schutzbereich 1 ein, so erreichen die ausgesandten Lichtsignale 7 nicht mehr das Begrenzungselement 3, sondern werden bereits an dem Objekt 13 reflektiert. In diesem Fall ist die ermittelte Lichtlaufzeit deutlich kürzer als die Maximal-Lichtlaufzeit, so daß sie von der Maximal-Lichtlaufzeit um mehr als den vorgegebenen Schwellenwert abweicht. Nach dem erfindungsgemäßen Verfahren wird in diesem Fall vor Auslösen eines Alarms oder Stoppbefehls geprüft, ob diese kürzere ermittelte Lichtlaufzeit innerhalb eines vorgegebenen Toleranzbereichs um die bzw. eine der weiteren zulässigen Lichtlaufzeiten liegt, wie sie in Fig. 1 beispielsweise dem Abstand L2 entspricht.

Ist dies der Fall, so wird das Objekt 13 als zulässiges Objekt erkannt und kein Unterbrechungssignal erzeugt und damit weder ein Alarmsignal durch die Alarmeinrichtung 10 noch ein Abschaltsignal über die Steuerleitung 12 generiert.

Solange beim Transport des Objekts 13 durch den Schutzbereich 1 die ermittelten Lichtlaufzeiten innerhalb des vorgegeben Toleranzbereichs um die zulässige Lichtlaufzeit liegen, wird in regelmäßigen Abständen oder kontinuierlich die jeweils ermittelte Lichtlaufzeit mit der zulässigen Lichtlaufzeit verglichen.

Tritt das Objekt 13 wieder aus dem Schutzbereich 1 aus, so liegt die im nächsten Meßzeitpunkt ermittelte Lichtlaufzeit nicht mehr innerhalb des vorgegebenen Toleranzbereichs um die zulässige Lichtlaufzeit, so daß das Austreten des Objekts 13 aus dem Schutzbereich von dem System erkannt wird. In diesem Fall wird vor Erzeugen eines Unterbrechungssignals geprüft, ob die ermittelte Lichtlaufzeit nun wiederum der Maximal-Lichtlaufzeit bzw. einer sonstigen weiteren zulässigen Lichtlaufzeit entspricht, und nur wenn dies nicht der Fall ist, wird ein Unterbrechungssignal erzeugt, durch das die Alarmeinrichtung 10 angesteuert sowie über die Steuerleitung 12 die Maschinensteuerung zum Stillsetzen der durch die Schutzeinrichtung abgesicherten Maschine 22 ausgelöst wird.

Als Kriterium für das Erzeugen eines Unterbrechungssignals kann beispielsweise überprüft werden, ob innerhalb eines vorgegebenen Zeitintervalls weder die Maximal-Lichtlaufzeit noch eine sonstige zulässige Lichtlaufzeit, jeweils mit entsprechenden Toleranzwerten ermittelt wird.

Ein solcher Fall tritt beispielsweise bei der Konstellation gemäß Fig. 2 auf.

In dieser Konstellation ist eine Person 16 in den Schutzbereich 1 eingedrungen, so daß die ausgesandten Lichtsignale 7 nicht mehr bis zu dem Begrenzungselement 3 gelangen, sondern an der Person 16 in Abständen L3 und L4 remittiert werden.

Da die in diesem Fall ermittelten Lichtlaufzeiten weder der Maximal-Lichtlaufzeit, entsprechend dem Abstand L1, noch der dem Abstand L2 entsprechenden zulässigen Lichtlaufzeit entsprechen, wird in diesem Fall das Unterbrechungssignal erzeugt und über die Alarmeinrichtung ein Alarm ausgelöst sowie über die Steuerleitung 12 ein Abschaltsignal an die Maschinensteuerung abgegeben.

Die Ausführungsform gemäß den Fig. 3 und 4 unterscheidet sich von der Ausführungsform gemäß den Fig. 1 und 2 lediglich dadurch, daß zusätzlich zu der Sensoreinheit 2 Hilfssensoren 17, 18 vorgesehen sind, die, wie aus Fig. 4 ersichtlich, bezüglich der Transportrichtung des Objekts 13 vor bzw. hinter dem Schutzbereich 1 angeordnet sind. Dabei können die Hilfssensoren 17, 18, wie in Fig. 3 dargestellt, an unterschiedlichen Seiten des Schutzbereichs 1 oder, wie in Fig. 4 dargestellt, auf der gleichen Seite des Schutzbereichs 1 angeordnet sein. Die jeweils vor bzw. hinter dem Schutzbereich 1 angeordneten Hilfssensoren 17, 18 können jeweils redundant, d.h. zwei- oder mehrfach vorhanden sein, wobei jeweils die Ausgangssignale der vor dem Schutzbereich angeordneten Hilfssensoren 17 bzw.

der hinter dem Schutzbereich angeordneten Hilfssensoren 18 miteinander UND-verknüpft sind.

Die Hilfssensoren 17, 18 sind über Leitungen 19, 20 mit der Sensoreinheit 2 verbunden, wobei über die Leitungen 19, 20 Start- und Stoppsignale an die Sensoreinheit abgegeben werden können.

Während bei der Ausführungsform gemäß den Fig. 1 und 2 das Umschalten der Vergleichswerte der Lichtlaufzeit von der Maximal-Lichtlaufzeit auf die weitere zulässige Lichtlaufzeit automatisch durch das Eindringen des Objekts 13 in den Schutzbereich 1 erfolgt, ist die Ausführungsform gemäß den Fig. 3 und 4 insbesondere dann sinnvoll, wenn beispielsweise aufgrund der Kontur des Objektes 13 dieses Umschalten innerhalb einer maximal zulässigen Ansprechzeit nicht möglich ist.

Gemäß dem Ausführungsbeispiel nach den Fig. 3 und 4 wird das Umschalten nicht durch das Eindringen des Objekts 13 in den Schutzbereich 1, sondern durch ein von dem Hilfssensor 17 abgegebenes Startsignal initiiert. Wie aus Fig. 4 zu erkennen ist, wird das Objekt 13 kurz vor seinem Eintreten in den Schutzbereich 1 von dem Hilfssensor 17, der beispielsweise als Lichtschranke oder als sonstige geeignete Erfassungseinheit ausgebildet sein kann, erfaßt, woraufhin ein entsprechendes Startsignal über die Leitung 19 zu der Sensoreinheit 2 abgegeben wird. Aufgrund dieses Startsignals wird beim nächsten Abtastvorgang anstelle der Maximal-Lichtlaufzeit die weitere zulässige Lichtlaufzeit für den Vergleich mit der ermittelten Lichtlaufzeit verwendet, so daß bereits beim Eintreten der vorderen Kante des Objekts 13 in den Schutzbereich 1 die korrekte zulässige Lichtlaufzeit als Vergleichswert verwendet wird.

Entsprechend wird nach Austreten des Objekts 13 aus dem Schutzbereich 1 von dem Hilfssensor 18 ein Stoppsignal erzeugt, wenn die hintere Kante des Objekts 13 den Erfassungsbereichs des Hilfssensors 18 verlassen hat. Dieses Stoppsignal wird über die Leitung 20 an die Sensoreinheit 2 weitergeleitet, woraufhin diese wieder auf die Maximal-Lichtlaufzeit als Vergleichswert umschaltet. Der Hilfssensor 18 ist dabei üblicherweise sehr dicht unmittelbar hinter dem Schutzbereich 1 angeordnet

Prinzipiell können die Hilfssensoren 17, 18 auf unterschiedliche Arten eingesetzt werden. Es ist beispielsweise möglich, daß die Hilfssensoren 17, 18 zur Initiierung des Automutings, d.h. des automatischen Umschaltens von der Maximal-Lichtlaufzeit auf die weitere zulässige Lichtlaufzeit, verwendet werden. Diese Umschaltung erfolgt dann, wenn zumindest einer der Hilfssensoren 17, 18 ein zulässiges Objekt erkennt, d.h. die Ausgänge der Hilfssensoren 17, 18 sind beispielsweise ODER-verknüpft. Tritt das Objekt aus dem Erfassungsbereich des Hilfssensors 17 aus und wird das Objekt nicht von dem zweiten Hilfssensor 18 erkannt, so wird wieder auf den Vergleich mit der Maximal-Lichtlaufzeit umgeschaltet. Durch diese Initiierung wird die Ansprechzeit der Schutzeinrichtung verbessert.

Weiterhin ist es möglich, das Automuting nur dann zu aktivieren und aufrechtzuerhalten, wenn zumindest einer der Hilfssensoren 17, 18 ein zulässiges Objekt erkennt und von der Sensoreinheit 2 anstelle der Maximal-Lichtlaufzeit die weitere zulässige Lichtlaufzeit ermittelt wird. Wenn das Objekt den Erfassungsbereich des Hilfssensors 17 verläßt und von dem zweiten Hilfssensor 18 nicht erkannt wird, so wird wieder auf den Vergleich mit der Maximal-Lichtlaufzeit umgeschaltet. Auch wenn die Sensoreinheit 2 nicht mehr die weitere zulässige Lichtlaufzeit ermittelt wird automatisch auf den Vergleich mit der Maximal-Lichtlaufzeit umgeschaltet. Durch diese Variante kann die Sicherheit einer erfindungsgemäßen Anlage weiter verbessert werden.

Darüber hinaus ist es auch denkbar, eine Verbesserung der Ansprechzeit durch folgende Verwendung eines Hilfssensors zu erreichen. Grundsätzlich läßt sich die Ansprechzeit der Schutzvorrichtung angeben durch

$$Tv = (n \times T_m) + T_a,$$

wobei Tv die Gesamtansprechzeit der Vorrichtung, n die Anzahl der Lichtlaufzeitmessungen eines Strahles, die zur Auswertung herangezogen werden, $T_m$ die Ansprechzeit oder Meßzeit einer Lichtlaufzeitmessung und $T_a$ die Ansprechzeit der Auswertung der Ergebnisse der Lichtlaufzeitmessung darstellen.

Die Ansprechzeit der Auswertung kann dabei definiert werden als

$$T_a = T_{aa} + T_{V1} + T_{V2},$$

wobeimit $T_a$ die Ansprechzeit der Auwertung der Ergebnisse der Lichtlaufzeitmessungen, $T_{aa}$ die allgemeine Ansprechzeit der Auswertungen, $T_{V1}$ die Ansprechzeit für den Vergleich mit der Maximal-Lichtlaufzeit und $T_{V2}$ die Ansprechzeit für den Vergleich mit der weiteren zulässigen Lichtlaufzeit darstellen.

Um einen zuverlässigen Betrieb der Vorrichtung zu gewährleisten, muß es möglich sein, störende Einwirkungen auf die Lichtlaufzeitmessungen, wie z.B. Insekten, Staub, Späne, gegenseitige Beeinflussung von Systemen usw. entgegenzuwirken. Eine mögliche Maßnahme hierzu ist die Verwendung von Mehrfachmessungen zur Erzeugung eines zuverlässigen Meßergebnisses. Je mehr Lichtlaufzeitmessungen zur Erzeugung der Auswertung herangezogen werden, desto höher ist die Zuverlässigkeit des Meßergebnisses, desto höher wird allerdings auch die Gesamtansprechzeit der Vorrichtung. Die Anzahl der Lichtlaufzeitmessungen, die jeweils zu einer Auswertung führen, kann in der Vorrichtung einstellbar sein.

Grundsätzlich ist es möglich, daß erfindungsgemäß die gemessene Lichtlaufzeit ständig mit der Maximal-Lichtlaufzeit und mit der weiteren zulässigen Lichtlaufzeit verglichen wird. In diesem Fall kann in Verbindung mit der für die eingestellte Anzahl der auszuwertenden Lichtlaufzeitmessungen notwendige Zeit, die Gesamtansprechzeit der Vorrichtung, eine Größe erreichen, die insbesondere bei sicherheitskritischen Anforderungen nicht mehr zulässig ist. Um die Ansprechzeit der Vorrichtung in solchen Fällen zu verbessern, können die Hilfssensoren 17, 18 wie folgt eingesetzt werden:

a) Das Signal der Hilfssensoren bewirkt eine Umschaltung der Anzahl der Lichtlaufzeitmessungen, die zu einer Auswertung führen, von dem eingestellten Wert auf einen vorgegebenen Mindestwert. Dies führt zu einer Verringerung der Gesamtansprechzeit der Vorrichtung.

b) Das Signal der Hilfssensoren bewirkt das Umschalten der Vergleichswerte der Lichtlaufzeit von der Maximal-Lichtlaufzeit auf die weitere zulässige Lichtlaufzeit. Hierdurch wird der Vergleich zwischen gemessener Lichtlaufzeit und Maximal-Lichtlaufzeit nicht ausgeführt und damit eine Verringerung der Gesamtlichtlaufzeit der Vorrichtung um die Zeit Tvi erreicht.

Dies Kriterien können jeweils separat oder in Kombination miteinander verwendet werden.

Es ist grundsätzlich auch denkbar, daß der Hilfssensor 17 sowohl das Start- als auch das Stoppsignal erzeugt, so daß in diesem Falle auf den Hilfssensor 18 verzichtet werden kann.

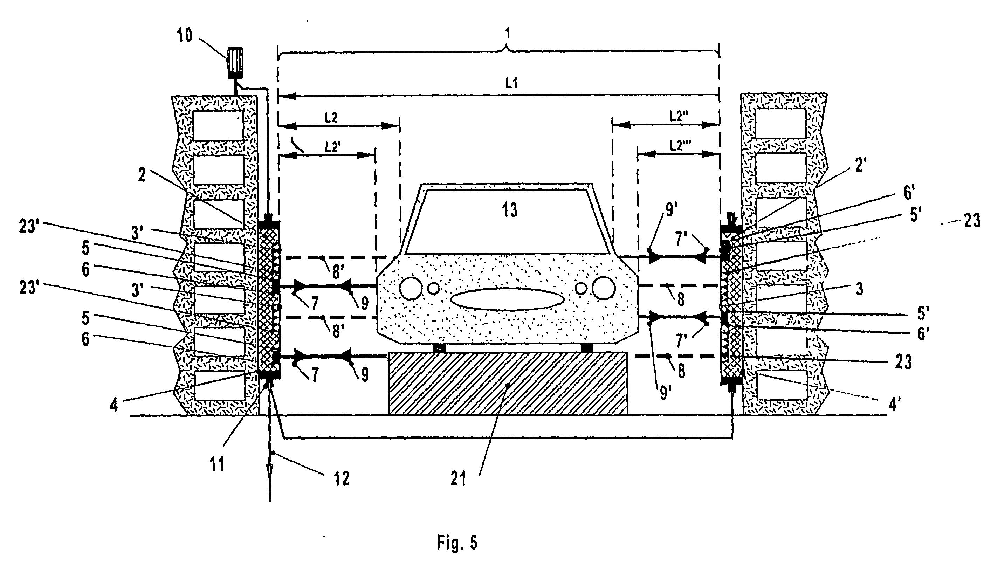

Während die Ausführungsbeispiele gemäß den Fig. 1 bis 4 lediglich einseitige Schutzeinrichtungen zeigen, ist die Ausführungsform gemäß Fig. 5 als zweiseitige Schutzeinrichtung ausgebildet.

Dazu ist jeweils auf beiden Seiten des Schutzbereichs eine Sensoreinheit 2, 2' angeordnet, die im wesentlichen baugleich ausgebildet sein können. Durch die beidseitige Anordnung der Sensoreinheiten 2, 2' ist gewährleistet, daß beim Eindringen eines Objekts 13 in den Schutzbereich 1 auf beiden Seiten des Objekts 13 ein aktives Schutzfeld bestehen bleibt. In dem in Fig. 5 dargestellten Ausführungsbeispiel wird durch die Lichtsignale 7, 9 der Sensoreinheit 2 ein linksseitiges Schutzfeld und durch die Lichtsignale 7', 9' der Sensoreinheit 2' ein rechtsseitiges Schutzfeld erhalten.

Weiterhin ist aus Fig. 5 zu erkennen, daß bei entsprechenden Außenkonturen der zulässigen Objekte 13, das in Fig. 5 als Kraftfahrzeug ausgebildet ist, unterschiedliche zulässige Abstände zwischen den Außenseiten des Objekts 13 und der jeweiligen Sensoreinheit 2, 2' und damit unterschiedliche zulässige Lichtlaufzeiten für die jeweiligen Sender/Empfänger-Paare möglich sind.

Weiterhin ist aus Fig. 5 zu erkennen, daß jeweils die Sensoreinheit 2, 2' für die jeweils gegenüberliegende Sensoreinheit 2', 2 unmittelbar das jeweilige Begrenzungselement 3, 3' bilden, wobei zur Erzeugung von extrem breiten Schutzbereichen 1 Reflektorelemente 23, 23' an den jeweiligen Sensoreinheiten 2, 2' vorgesehen sein können. Selbstverständlich können entsprechende Sensorelemente auch bei den Ausführungsbeispielen gemäß den Fig. 1 bis 4 vorgesehen sein, um einen möglichst breiten Schutzbereich zu erhalten.

Die Sensoreinheiten 2, 2' können über eine einfachen Folgeanschluß (OSSD-Ausgang) miteinander verbunden sein, so daß eine Ansteuerung der Alarmeinrichtung 10 sowie der Maschinensteuerung über die Steuerleitung 12 durch jede der Sensoreinheiten 2, 2' unabhängig möglich ist.

Sämtliche bezüglich der Figuren 1 bis 4 beschriebenen Varianten der Erfindung können selbstverständlich auch bei einer zweiseitigen Schutzeinrichtung, wie sie beispielhaft anhand der Figur 5 beschrieben ist, eingesetzt werden.

Mit der vorliegenden Erfindung ist eine einfache, sehr variable und kostengünstige Schutzeinrichtung erzeugbar, für die Objekte mit praktisch beliebigen Konturen als zulässige Objekte definiert werden können, während nicht zulässige Objekte sicher beim Eindringen in den Schutzbereich erkannt werden.

**Bezugszeichenliste**

| 1 | Schutzbereich |
|---|---|
| 2, 2' | Sensoreinheiten |
| 3, 3' | Begrenzungselement |
| 4 | Gehäuse |
| 5, 5' | Sender |
| 6, 6' | Empfänger |
| 7, 7' | Pfeile/Lichtsignale |

| 8, 8' | gestrichelte Linie |
|---|---|
| 9, 9' | Pfeile/reflektierte Lichtsignale |
| 10 | Alarmeinrichtung |
| 11 | Ausgang |
| 12 | Steuerleitung |
| 13 | Objekt |
| 14 | Palette |
| 15 | kistenförmige Elemente |
| 16 | Person |
| 17 | Hilfssensor |
| 18 | Hilfssensor |
| 19 | Leitung |
| 20 | Leitung |
| 21 | Förderband |
| 22 | Maschine |
| 23, 23' | Reflektoren |
| L1 | Breite des Schutzbereichs |
| L2, L2', L2'', L2''' | zulässige Abstände |
| L 3, L4 | unzulässige Abstände |

**Patentansprüche**

1. Verfahren zum Überwachen eines Schutzbereichs, bei dem zumindest ein Lichtsignal durch den Schutzbereich hindurch in Richtung eines den Schutzbereich zumindest bereichsweise begrenzenden Begrenzungselements ausgesandt wird, das Lichtsignal von dem Begrenzungselement zu einem Lichtempfänger reflektiert oder remittiert wird, die Lichtlaufzeit vom Aussenden bis zum Empfangen des Lichtsignals ermittelt wird und ein Unterbrechungssignal erzeugt wird, wenn die ermittelte Lichtlaufzeit von einer vorbestimmten Maximal-Lichtlaufzeit zumindest um einen vorgegebenen Schwellenwert abweicht,
**dadurch gekennzeichnet,**
**daß** die ermittelte Lichtlaufzeit mit zumindest einer weiteren, von der Maximal-Lichtlaufzeit verschiedenen, zulässigen Lichtlaufzeit verglichen wird und kein Unterbrechungssignal erzeugt wird, wenn die ermittelte Lichtlaufzeit innerhalb eines vorgegebenen Toleranzbereichs um die zulässige Lichtlaufzeit liegt.

2. Verfahren nach Anspruch 1,
**dadurch gekennzeichnet,**
**daß** die Lichtlaufzeit des Lichtsignals kontinuierlich oder in vorgegebenen, insbesondere periodischen Zeitabständen ermittelt wird.

3. Verfahren nach Anspruch 1 oder 2,
**dadurch gekennzeichnet,**
**daß** die jeweils ermittelte Lichtlaufzeit automatisch mit der weiteren zulässigen Lichtlaufzeit verglichen wird, wenn eine Überschreitung des Schwellenwertes festgestellt wird.

4. Verfahren nach einem der vorhergehenden Ansprüche,
**dadurch gekennzeichnet,**
**daß** die jeweils ermittelte Lichtlaufzeit solange mit der weiteren zulässigen Lichtlaufzeit verglichen wird, bis eine Überschreitung des Toleranzbereichs festgestellt wird.

5. Verfahren nach einem der vorhergehenden Ansprüche,
**dadurch gekennzeichnet,**
**daß** das Unterbrechungssignal erzeugt wird, wenn innerhalb eines vorgegebenen Zeitintervalls weder das Unterschreiten des Schwellenwertes noch das Einhalten des Toleranzbereichs festgestellt wird.

6. Verfahren nach einem der vorhergehenden Ansprüche,
**dadurch gekennzeichnet,**
**daß** der Vergleich der ermittelten Lichtlaufzeit mit der weiteren zulässigen Lichtlaufzeit durch ein externes Startsignal ausgelöst wird, insbesondere daß das Startsignal durch ein zu erkennendes Objekt erzeugt wird, unmittelbar bevor dieses in den Schutzbereich eindringt.

7. Verfahren nach einem der vorhergehenden Ansprüche,
**dadurch gekennzeichnet,**
**daß** von dem Vergleich der ermittelten Lichtlaufzeit mit der weiteren zulässigen Lichtlaufzeit auf den Vergleich mit der Maximal-Lichtlaufzeit aufgrund eines externen Stoppsignals umgeschaltet wird, insbesondere daß das Stoppsignal durch ein zu erkennendes Objekt erzeugt wird, unmittelbar nachdem dieses den Schutzbereich verlassen hat.

8. Verfahren nach einem der vorhergehenden Ansprüche,
**dadurch gekennzeichnet,**
**daß** das Unterbrechungssignal erzeugt wird, wenn die ermittelte Lichtlaufzeit die vorbestimmte Maximal-Lichtlaufzeit zumindest um den vorgegebenen Schwellenwert unterschreitet.

9. Verfahren nach einem der vorhergehenden Ansprüche,
**dadurch gekennzeichnet,**
**daß** bei Erzeugen des Unterbrechungssignals eine durch den Schutzbereich gesicherte Vorrichtung abgeschaltet und/oder ein Alarmsignal erzeugt wird.

10. Verfahren nach einem der vorhergehenden Ansprüche,
**dadurch gekennzeichnet,**
**daß** die Maximal-Lichtlaufzeit und/oder die weitere zulässige Lichtlaufzeit in einem Teach-In-Verfahren eingelernt werden.

11. Verfahren nach einem der vorhergehenden Ansprüche,
**dadurch gekennzeichnet,**
**daß** die ermittelte Lichtlaufzeit mit mehreren weiteren zulässigen Lichtlaufzeiten verglichen wird.

12. Verfahren nach einem der vorhergehenden Ansprüche,
**dadurch gekennzeichnet,**
**daß** mehrere, insbesondere ein Lichtgitter bildende Lichtsignale verwendet werden.

13. Verfahren nach einem der vorhergehenden Ansprüche,
**dadurch gekennzeichnet,**
**daß** kein Unterbrechungssignal erzeugt wird, wenn zumindest für einen Teil der Lichtsignale die ermittelte Lichtlaufzeit innerhalb eines vorgegebenen Toleranzbereichs um eine jeweils zulässige Lichtlaufzeit liegt.

14. Verfahren nach einem der vorhergehenden Ansprüche,
**dadurch gekennzeichnet,**
**daß** die Lichtsignale aus unterschiedlichen Richtungen, insbesondere aus gegenüberliegenden Richtungen durch den Schutzbereich hindurch gesandt werden.

15. Verfahren nach einem der vorhergehenden Ansprüche,
**dadurch gekennzeichnet,**
**daß** pulsförmige Lichtsignale verwendet werden.

16. Vorrichtung zur Überwachung eines Schutzbereichs (1) mit zumindest einem ein Lichtsignal (7, 7') in den Schutzbereich aussenden Sender (5, 5'), einem dem Sender (5, 5') gegenüberliegenden, den Schutzbereich (1) zumindest teilweise begrenzenden Begrenzungselement (3, 3', 23, 23') zum Reflektieren oder Remittieren des ausgesandten Lichtsignals (7, 7'), zumindest einem Empfänger (6, 6') zum Empfangen des reflektierten oder remittierten Lichtsignals (9, 9') und einer Auswerteeinheit zum Ermitteln der Lichtlaufzeit zwischen Aussenden und Empfangen des Lichtsignals (7, 7', 9, 9') und zum Erzeugen eines Unterbrechungssignals, wenn die ermittelte Lichtlaufzeit von einer vorbestimmten Maximal-Lichtlaufzeit zumindest um einen vorgegebenen Schwellenwert abweicht, insbesondere zur Durchführung des Verfahrens nach einem der vorhergehenden Ansprüche,
**dadurch gekennzeichnet,**
**daß** die Auswerteeinheit zum Vergleichen der ermittelten Lichtlaufzeit mit zumindest einer weiteren, von der Maximal-Lichtlaufzeit verschiedenen, zulässigen Lichtlaufzeit ausgebildet ist und daß die Auswerteeinheit kein Unterbrechungssignal erzeugt, wenn die ermittelte Lichtlaufzeit innerhalb eines vorgegebenen Toleranzbereichs um die zulässige Lichtlaufzeit liegt.

**17.** Vorrichtung nach Anspruch 16,
**dadurch gekennzeichnet,**
**daß** mehrere Sender (5, 5') und Empfänger (6, 6') vorgesehen sind, die zusammen mit einem oder mehreren Begrenzungselementen (3, 3', 23, 23') ein Lichtgitter bilden.

**18.** Vorrichtung nach Anspruch 16 oder 17,
**dadurch gekennzeichnet,**
**daß** die Sender (5, 5') und Empfänger (6, 6') sowie die Begrenzungselemente (3, 23) im wesentlichen in einer Ebene angeordnet sind.

**19.** Vorrichtung nach einem der Ansprüche 16 bis 18,
**dadurch gekennzeichnet,**
**daß** jeweils einander zugeordnete Sender (5, 5') und Empfänger (6, 6') auf derselben Seite des Schutzbereichs (1) und das zugeordnete Begrenzungselement (3, 3', 23, 23') auf der gegenüberliegenden Seite der Schutzbereichs (1) angeordnet sind.

**20.** Vorrichtung nach einem der Ansprüche 16 bis 19,
**dadurch gekennzeichnet,**
**daß** das Begrenzungselement (3, 3') als Reflektor (23, 23') ausgebildet ist.

**21.** Vorrichtung nach einem der Ansprüche 16 bis 20,
**dadurch gekennzeichnet,**
**daß** auf beiden Seiten des Schutzbereichs (1) sowohl Sender (5, 5') als auch Empfänger (6, 6') als auch Begrenzungselemente (3, 3', 23, 23') angeordnet sind, insbesondere daß die auf beiden Seiten des Schutzbereichs (1) angeordneten Sender (5, 5'), Empfänger (6, 6') und Begrenzungselemente (3, 3', 23, 23') im wesentlichen baugleich ausgebildet sind.

**Claims**

**1.** A method of monitoring a protected zone, wherein at least one light signal is transmitted through the protected zone in the direction of a bounding element bounding the protected zone at least regionally, the light signal is reflected or remitted to a light receiver by the bounding element, the light transit time from the transmission to the reception of the light signal is determined, and an interruption signal is generated when the determined light transit time deviates from a pre-determined maximum light transit time by at least a pre-determined threshold value,
**characterised in that**
the determined light transit time is compared with at least one further permitted light transit time different from the maximum light transit time and no interruption signal is generated when the determined light transit time lies within a pre-determined tolerance range around the permitted light transit time.

**2.** A method in accordance with claim 1, **characterised in that** the light transit time of the light signal is determined continuously or at pre-determined time intervals, in particular periodic time intervals.

**3.** A method in accordance with claim 1 or claim 2, **characterised in that** the respectively determined light transit time is automatically compared with the further permitted light transit time if an exceeding of the threshold value is determined.

**4.** A method in accordance with any one of the preceding claims, **characterised in that** the respectively determined light transit time is compared with the further permitted light transit time for so long until an exceeding of the tolerance range is determined.

**5.** A method in accordance with any one of the preceding claims, **characterised in that** the interruption signal is generated when neither the falling below of the threshold value nor the keeping to the tolerance range is determined within a pre-determined time interval.

**6.** A method in accordance with any one of the preceding claims, **characterised in that** the comparison of the determined light transit time with the further permitted light transit time is triggered by an external start signal; in particular **in that** the start signal is generated by an object to be recognised directly before it intrudes into the protected zone.

7. A method in accordance with any one of the preceding claims, **characterised in that** a switch is made from the comparison of the determined light transit time with the further permitted light transit time to the comparison with the maximum light transit time due to an external stop signal; in particular **in that** the stop signal is generated by an object to be recognised directly after it has left the protected zone.

8. A method in accordance with any one of the preceding claims, **characterised in that** the interruption signal is generated when the determined light transit time falls below the pre-determined maximum light transit time by at least the pre-determined threshold value.

9. A method in accordance with any one of the preceding claims, **characterised in that** an apparatus secured by protected zone is switched off and/or an alarm signal is generated on generation of the interruption signal.

10. A method in accordance with any one of the preceding claims, **characterised in that** the maximum light transit time and/or the further permitted light transit time is learnt in a teach-in process.

11. A method in accordance with any one of the preceding claims, **characterised in that** the determined light transit time is compared with a plurality of further light transit times.

12. A method in accordance with any one of the preceding claims, **characterised in that** a plurality of light signals are used, in particular form a light grid.

13. A method in accordance with any one of the preceding claims, **characterised in that** no interruption signal is generated when the determined light transit time lies within a pre-determined tolerance range around a respective permitted light transit time for at least some of the light signals.

14. A method in accordance with any one of the preceding claims, **characterised in that** the light signals are transmitted through the protected zone from different directions, in particular from opposite directions.

15. A method in accordance with any one of the preceding claims, **characterised in that** pulsed light signals are used.

16. An apparatus for the monitoring of a protected zone (1) comprising at least one transmitter (5, 5') transmitting a light signal (7, 7') into the protected zone, a bounding element (3, 3', 23, 23') disposed opposite the transmitter (5, 5') and bounding the protected zone (1) at least in part for the reflection or remission of the transmitted light signal (7, 7'), at least one receiver (6, 6') for the reception of the reflected or remitted light signal (9, 9') and an evaluation unit for the determination of the light transit time between the transmission and the reception of the light signal (7, 7', 9, 9') and for the generation of an interruption signal when the determined light transit time deviates by a pre-determined threshold value from a pre-determined maximum light transit time, in particular for the carrying out of the method in accordance with any one of the preceding claims,
**characterised in that**
the evaluation unit is made for the comparison of the determined light transit time with at least one further permitted light transit time different from the maximum light transit time; and **in that** the evaluation unit does not generate an interruption signal when the determined light transit time lies inside a pre-determined tolerance range around the permitted light transit time.

17. An apparatus in accordance with claim 16, **characterised in that** a plurality of transmitters (5, 5') and receivers (6, 6') are provided which form a light grid together with one or more bounding elements (3, 3', 23, 23').

18. An apparatus in accordance with claim 16 or 17, **characterised in that** the transmitters (5, 5') and the receivers (6, 6') and the bounding elements (3, 23) are arranged substantially in one plane.

19. An apparatus in accordance with any one of the claims 16 to 18, **characterised in that** transmitters (5, 5') and receivers (6, 6') respectively associated with one another are arranged at the same side of the protected zone (1) and the associated bounding element (3, 3', 23, 23') is arranged at the opposite side of the protected zone (1).

**20.** An apparatus in accordance with any one of the claims 16 to 19, **characterised in that** the bounding element (3, 3') is made as a reflector (23, 23').

**21.** An apparatus in accordance with any one of the claims 16 to 20, **characterised in that** both transmitters (5, 5') and receivers (6, 6') and also bounding elements (3, 3', 23, 23') are arranged at both sides of the protected zone (1); in particular **in that** the transmitters (5, 5'), receivers (6, 6') and bounding elements (3, 3', 23, 23) arranged at both sides of the protected zone (1) are made in substantially the same construction.

**Revendications**

**1.** Procédé pour surveiller une zone de protection, dans lequel au moins un signal lumineux est émis à travers la zone de protection en direction d'un élément de délimitation qui délimite au moins localement la zone de protection, le signal lumineux est réfléchi ou ré-émis par l'élément de délimitation vers un récepteur de lumière, on détermine le temps de parcours de la lumière depuis l'émission jusqu'à la réception du signal lumineux et on génère un signal d'interruption, lorsque le temps de parcours déterminé de la lumière s'écarte d'au moins une valeur seuil prédéfinie vis-à-vis d'un temps de parcours de lumière maximal prédéterminé,
**caractérisé en ce que**
l'on compare le temps de parcours déterminé de la lumière à au moins un autre temps de parcours de lumière admissible différent du temps de parcours de lumière maximal, et **en ce que** l'on ne génère pas de signal d'interruption lorsque le temps de parcours de lumière déterminé tombe à l'intérieur d'une plage de tolérances prédéfinie autour du temps de parcours de lumière admissible.

**2.** Procédé selon la revendication 1,
**caractérisé en ce que**
l'on détermine le temps de parcours de lumière du signal lumineux soit en continu soit à des intervalles temporels prédéfinis, en particulier périodiques.

**3.** Procédé selon l'une ou l'autre des revendications 1 et 2,
**caractérisé en ce que**
l'on compare automatiquement le temps de parcours de lumière respectif déterminé à l'autre temps de parcours de lumière admissible lorsque l'on constate un dépassement de la valeur seuil.

**4.** Procédé selon l'une des revendications précédentes,
**caractérisé en ce que**
l'on compare le temps de parcours de lumière respectif déterminé à l'autre temps de parcours de lumière admissible aussi longtemps que l'on constate un dépassement de la plage de tolérances.

**5.** Procédé selon l'une des revendications précédentes,
**caractérisé en ce que**
l'on génère le signal d'interruption lorsque l'on ne constate, à l'intérieur d'un intervalle temporel prédéfini, ni le passage au-dessous de la valeur seuil ni le respect de la plage de tolérances.

**6.** Procédé selon l'une des revendications précédentes,
**caractérisé en ce que**
la comparaison du temps de parcours de lumière déterminé à l'autre temps de parcours de lumière admissible est déclenchée par un signal externe de démarrage, en particulier **en ce que** le signal de démarrage est généré par un objet à reconnaître, immédiatement avant que celui-ci pénètre dans la zone de protection.

**7.** Procédé selon l'une des revendications précédentes,
**caractérisé en ce que**
suite à un signal externe d'arrêt, on bascule depuis la comparaison du temps de parcours de lumière déterminé à l'autre temps de parcours de lumière admissible vers la comparaison au temps de parcours de lumière maximal, en particulier **en ce que** le signal d'arrêt est généré par un objet à reconnaître, immédiatement après que celui-ci a quitté la zone de protection.

**8.** Procédé selon l'une des revendications précédentes,
**caractérisé en ce que**

l'on génère le signal d'interruption lorsque le temps de parcours de lumière déterminé passe au moins de la valeur seuil prédéfinie au-dessous du temps de parcours de lumière maximal prédéterminé.

9. Procédé selon l'une des revendications précédentes,
   **caractérisé en ce que**
   lors de la génération du signal d'interruption, on met à l'arrêt un dispositif sécurisé par la zone de protection et/ou on génère un signal d'alarme.

10. Procédé selon l'une des revendications précédentes,
    **caractérisé en ce que**
    l'on fait apprendre le temps de parcours de lumière maximal et/ou l'autre temps de parcours de lumière admissible par un procédé d'apprentissage.

11. Procédé selon l'une des revendications précédentes,
    **caractérisé en ce que**
    l'on compare le temps de parcours de lumière déterminé à plusieurs autres temps de parcours de lumière admissibles.

12. Procédé selon l'une des revendications précédentes,
    **caractérisé en ce que**
    l'on utilise plusieurs signaux lumineux formant en particulier un grillage de lumière.

13. Procédé selon l'une des revendications précédentes,
    **caractérisé en ce que**
    l'on ne génère pas de signal d'interruption lorsque, pour une partie au moins des signaux lumineux, le temps de parcours de lumière déterminé tombe à l'intérieur d'une plage de tolérances prédéfinie autour d'un temps de parcours de lumière respectif admissible.

14. Procédé selon l'une des revendications précédentes,
    **caractérisé en ce que**
    les signaux lumineux sont envoyés à travers la zone de protection depuis différentes directions, en particulier depuis des directions opposées.

15. Procédé selon l'une des revendications précédentes,
    **caractérisé en ce que**
    l'on utilise des signaux lumineux en forme d'impulsions.

16. Dispositif de surveillance d'une zone de protection (1), comportant au moins un émetteur (5, 5') qui émet un signal lumineux (7, 7') dans la zone de protection, un élément de délimitation (3, 3', 23, 23') opposé à l'émetteur (5, 5'), délimitant au moins partiellement la zone de protection (1) et destiné à réfléchir ou à ré-émettre le signal lumineux émis (7, 7'), au moins un récepteur (6, 6') destiné à recevoir le signal lumineux réfléchi ou ré-émis (9, 9'), et une unité d'évaluation destinée à déterminer le temps de parcours de lumière entre l'émission et la réception du signal lumineux (7, 7', 9, 9') et à générer un signal d'interruption lorsque le temps de parcours de lumière déterminé s'écarte d'au moins une valeur seuil prédéfinie vis-à-vis d'un temps de parcours de lumière maximal prédéterminé, en particulier pour mettre en oeuvre le procédé selon l'une des revendications précédentes,
    **caractérisé en ce que**
    l'unité d'évaluation est réalisée pour comparer le temps de parcours de lumière déterminé à au moins un autre temps de parcours de lumière admissible différent du temps de parcours de lumière maximal, et **en ce que** l'unité d'évaluation ne génère pas de signal d'interruption lorsque le temps de parcours de lumière déterminé tombe à l'intérieur d'une plage de tolérances prédéfinie autour du temps de parcours de lumière admissible.

17. Dispositif selon la revendication 16,
    **caractérisé en ce que**
    il est prévu plusieurs émetteurs (5, 5') et plusieurs récepteurs (6, 6') qui forment conjointement avec un ou avec plusieurs éléments de délimitation (3, 3', 23, 23') un grillage de lumière.

18. Dispositif selon l'une ou l'autre des revendications 16 et 17,
    **caractérisé en ce que**

les émetteurs (5, 5') et les récepteurs (6, 6') ainsi que les éléments de délimitation (3, 23) sont agencés sensiblement dans un seul plan.

**19.** Dispositif selon l'une des revendications 16 à 18,
**caractérisé en ce que**
des émetteurs (5, 5') et des récepteurs (6, 6') respectifs mutuellement associés sont agencés sur le même côté de la zone de protection (1), et l'élément de délimitation associé (3, 3', 23, 23') est agencé sur le côté opposé de la zone de protection (1).

**20.** Dispositif selon l'une des revendications 16 à 19,
**caractérisé en ce que**
l'élément de délimitation (3, 3') est réalisé sous forme de réflecteur (23, 23').

**21.** Dispositif selon l'une des revendications 16 à 20,
**caractérisé en ce que**
il est prévu sur les deux côtés de la zone de protection (1) aussi bien des émetteurs (5, 5') que des récepteurs (6, 6') et également des éléments de délimitation (3, 3', 23, 23'), en particulier **en ce que** les émetteurs (5, 5'), les récepteurs (6, 6') et les éléments de délimitation (3, 3', 23, 23') agencés sur les deux côtés de la zone de protection (1) sont sensiblement de structure identique.

FIG. 1

FIG. 2

FIG. 3

FIG. 4

Fig. 5